# NOUVEAU FASCICULE DE BREVET EUROPEEN

(11) **EP 1 778 435 B2**
(45) Date de publication et mention de la décision concernant l'opposition: **25.10.2017**
(45) Mention de la délivrance du brevet: 22.07.2009
(21) Numéro de dépôt: 05795941.3
(22) Date de dépôt: 11.08.2005
(51) Int. Cl.: B23Q 7/04, B25J 9/00, B23K 37/047, B23P 19/00, B62D 65/00

(54) **POSTE DE REALISATION D'UN TRAVAIL SUR UNE PIECE**
VERFAHREN ZUR DURCHFÜHRUNG VON ARBEITEN AUF EINEM TEIL
METHOD FOR PERFORMING WORK ON A PART

(30) Priorité: 16.08.2004 FR 0408905
(43) Date de publication de la demande: 02.05.2007
(73) Titulaire: ABB France, 92566 Rueil-Malmaison Cedex (FR)
(72) Inventeur: NEGRE, Bernard, F-95150 TAVERNY (FR); BIDAUD, Daniel, F-78260 ACHERES (FR); PINCHON, Gérard, 78260 ACHERES (FR)
(74) Mandataire: Giavarini, Francesco
(86) Numéro de dépôt international: PCT/FR2005/002072
(87) Numéro de publication internationale: WO 2006/021678

(56) Documents cités:
- EP-A- 1 380 392
- WO-A-03/080288
- DE-A1- 19 835 589
- DE-U1- 20 304 022
- US-B1- 6 360 421
- PATENT ABSTRACTS OF JAPAN vol. 1996, no. 03, 29 mars 1996 (1996-03-29) -& JP 07 303996 A (TOYOTA MOTOR CORP), 21 novembre 1995 (1995-11-21)
- PATENT ABSTRACTS OF JAPAN vol. 012, no. 157 (M-696), 13 mai 1988 (1988-05-13) -& JP 62 275597 A (SUZUKI MOTOR CO LTD), 30 novembre 1987 (1987-11-30)
- PATENT ABSTRACTS OF JAPAN vol. 1997, no. 11, 28 novembre 1997 (1997-11-28) -& JP 09 192947 A (TOYOTA AUTO BODY CO LTD), 29 juillet 1997 (1997-07-29)

## Description

L'invention a pour objet un procédé de manipulation de pièces dans un poste de fixation d'au moins deux pièces l'une sur l'autre telle qu'une opération de soudage, de sertissage, de rivetage ou autre.

### ARRIERE PLAN DE L'INVENTION

On connaît des postes qui comprennent un support pour positionner la pièce dans le poste au cours du travail et un robot préhenseur pour évacuer la pièce du poste à la fin du travail. Le support est monté sur un tiroir qui permet d'extraire le support du poste pour charger une pièce sur celui-ci pendant qu'un support pourvu d'une pièce est introduit dans le poste pour que le travail soit réalisé sur celle-ci. Le chargement d'une pièce sur le support est donc réalisé en temps masqué. Cependant, ceci nécessite de disposer d'au moins deux supports et d'un système à tiroirs. En outre, le robot préhenseur n'est pas exploité sur la totalité de la durée du cycle.

Il est également connu, notamment du document US-B1-6 360 421 d'avoir deux supports sur lesquels les pièces à fixer sont successivement placées par un robot préhenseur.

### OBJET DE L'INVENTION

Il serait donc intéressant de disposer d'un moyen permettant de simplifier les éléments nécessaires au chargement et au déchargement d'une pièce dans un tel poste.

### BREVE DESCRIPTION DE L'INVENTION

A cet effet, on prévoit selon l'invention un procédé de manipulation selon la revendication 1.

Ainsi, le robot préhenseur est mieux exploité pendant le cycle de travail puisqu'il participe également au positionnement de la pièce. Le chargement de la nouvelle pièce dans le support est de plus réalisé en temps masqué. En outre, la pièce ayant déjà été saisie par le robot préhenseur pour positionner celle-ci, il est prêt à évacuer cette pièce dès la fin du travail. On gagne ainsi du temps par rapport à l'opération d'évacuation de la pièce.

De préférence préalablement au montage de la nouvelles pièces dans le support, le support est sorti du poste.

Ceci permet de disposer d'un espace important pour le chargement de la pièce dans le support sans risquer de gêner les mouvements des robots réalisant le travail. Une fois la nouvelle pièce dans le support, le support peut être introduit dans le poste alors que la pièce précédente est toujours en cours de travail.

D'autres caractéristiques et avantages de l'invention ressortiront à la lecture de la description qui suit d'un mode de mise en oeuvre particulier non limitatif de l'invention.

### BREVE DESCRIPTION DES DESSINS

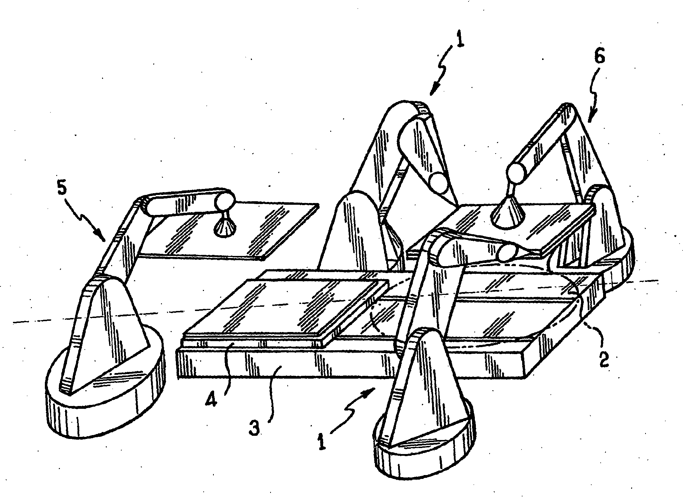

Il sera fait référence à la figure unique annexée représentant schématiquement un poste de travail utilisable par la mise en oeuvre du procédé de l'invention.

### DESCRIPTION DETAILLEE DE L'INVENTION

Le poste de travail ici décrit est un poste de soudage comprenant deux robots généralement désignés en 1, connus en eux-mêmes, ayant chacun un bras dont une extrémité est pourvue d'une pince de soudage. Les robots de soudage 1 sont disposés autour d'une zone de travail 2 (symbolisée en trait mixte double).

Le poste de travail comprend un dispositif de chargement 3 de pièces dans la zone de travail 2. Le dispositif de chargement 3 comprend d'une part un système classique à tiroir qui permet d'introduire dans la zone de travail 2 un support 4 pour des pièces à souder et d'autre part un robot chargeur 5 qui place les pièces sur le support 4. Le support 4 est mobile entre une position de chargement dans laquelle le support 4 est hors de la zone de travail et une position de travail dans laquelle le support 4 est dans la zone de travail. Le support 4 comprend en outre de façon connue en elle-même des organes de positionnement et d'immobilisation l'une par rapport à l'autre des pièces à souder (ces organes ne sont pas visibles sur la figure).

Le poste de travail comprend également un dispositif de déchargement de la pièce hors de la zone de travail 2 qui comprend un robot préhenseur 6 connu en lui-même.

Conformément à l'invention, le procédé de manipulation débute par l'étape de charger les pièces sur le support 4 pendant que celui-ci est dans sa position de chargement. Le support 4 est ensuite amené dans sa position de travail dans laquelle il positionne les pièces.

Le soudage des pièces l'une à l'autre débute alors.

En parallèle, le robot préhenseur vient saisir au moins une des pièces et, lorsque le soudage est avancé au point que le positionnement relatif des pièces soit figé, le robot préhenseur 6 décolle les pièces du support 4 et se substitue à celui-ci. Pour que le soudage ne soit pas interrompu pendant la substitution, les robots de soudage ont été programmés pour tenir compte de la modification du positionnement des pièces de manière à suivre les pièces dans leur déplacement.

Le support 4 est alors ramené dans sa position de chargement pour que le robot de chargement 5 pose les pièces suivantes sur le support 4 qui est ensuite ramené en position de travail.

Le soudage fini, le robot préhenseur 6 évacue les pièces hors de la zone de travail tandis que les robots de soudage 1 commencent à souder les pièces reposant sur le support 4.

Ainsi, les moyens de positionnement des pièces au cours du travail dans ce poste de travail comprennent le support 4 pour positionner les pièces pendant une première partie du travail et le robot préhenseur 6 pour positionner les pièces pendant une deuxième partie du travail.

Bien entendu, l'invention n'est pas limitée au mode de réalisation décrit et on peut y apporter des variantes de réalisation sans sortir du cadre de l'invention tel que défini par les revendications.

En particulier, le support 4 peut être laissé dans la zone de travail pour être chargé.

## Revendications

1. Procédé de manipulation d'au moins une pièce dans un poste de fixation avec robots de soudage d'au moins deux pièces l'une sur l'autre, **caractérisé en ce qu'**il comprend les étapes de :
- positionner les pièces dans le poste au moyen d'un support (4), avec lesdits robots de soudage,
- commencer la fixation,
- substituer un robot préhenseur (6) au support lorsque la fixation est suffisamment avancée pour figer le positionnement relatif des deux pièces
- monter de nouvelles pièces dans le support dès que la substitution est réalisée et
- poursuivre la fixation avec lesdits robots de soudage des pièces portées par le robot préhenseur, et pour que le soudage ne soit pas interrompu pendant la substitution, les robots de soudage sont programmés pour tenir compte de la modification du positionnement des pièces de manière à suivre les pièces dans leur deplacemnet et, à la fin de la fixation, évacuer du poste, au moyen du robot préhenseur, les pièces ainsi fixées.

2. Procédé selon la revendication 1, **caractérisé en ce que,** préalablement au montage des nouvelles pièces dans le support (4), le support est sorti du poste.

## Patentansprüche

1. Verfahren zur Handhabung mindestens eines Teils in einer Befestigungsstation mit Schweißrobotern zur Befestigung mindestens zweier Teile aneinander, **dadurch gekennzeichnet, dass** es die Schritte umfasst:
- Positionieren der Teile in der Station mittels einer Trägeranordnung (4),
- Beginnen mit der Befestigung mit den Schweißrobotern,
- Ersetzen der Trägeranordnung durch einen Greifroboter (6), wenn die Befestigung so ausreichend fortgeschritten ist, dass die relative Positionierung der beiden Teile fixiert ist,
- Montieren neuer Teile in der Trägeranordnung, sobald das Ersetzen erfolgt ist, und
- Fortsetzen der Befestigung der von dem Greifroboter getragenen Teile mit den Schweißrobotern, und, wobei, damit das Schweißen während des Ersetzens nicht unterbrochen wird, die Schweißroboter programmiert sind, um die Änderung der Positionierung der Teile so berücksichtigen, dass sie den Teilen während ihrer Verschiebung folgen, und Entfernen der so befestigten Teile mittels des Greifroboters aus der Station am Ende der Befestigung.

2. Verfahren nach Anspruch 1, **dadurch gekennzeichnet, dass** die Trägeranordnung (4) vor der Montage der neuen Teile in derselben aus der Station herausgefahren wird.

## Claims

1. A method of handling at least one workpiece in a workstation for fastening together with welding robots at least two workpieces, the method being **characterised in that** it comprises the steps of:
- Positioning the workpieces in the workstation by means of a support (4), with said welding robots;
- Beginning fastening;
- Using a handling robot (6) to take over the support function once the fastening has advanced sufficiently to set the relative positioning of the two workpieces;
- Mounting new workpieces on the support as soon as the handling robot has taken over; and
- Continuing fastening with said welding robots of the workpieces handled by the handling robot and, so that the welding is not interrupted during the substitution, the welding robots are programmed to take account of the modification of the positioning of the workpieces so as to monitor the workpieces in their movement and, at the end of fastening together, using the handling robot to remove the workpieces fastened together in this way from the workstation.

2. A method according to claim 1, **characterized in that**, prior to mounting new workpieces on the support (4), the support is moved out from the workstation.
